# EUROPÄISCHE PATENTANMELDUNG

(11) **EP 1 424 502 A2**
(43) Veröffentlichungstag der Anmeldung: **02.06.2004**
(21) Anmeldenummer: 03025042.7
(22) Anmeldetag: 30.10.2003
(51) Int. Cl.: F16C 33/64, F16C 19/06

(54) **Wälzlagerkäfig und Verfahren zu seiner Herstellung**

(30) Priorität: 27.11.2002 DE 10255374
(71) Anmelder: SIEMENS AKTIENGESELLSCHAFT, 80333 München (DE)
(72) Erfinder: Kurth, Jens, 97618 Unsleben (DE)

(57) **Zusammenfassung**

Lagersystem (1) insbesondere für Rauch- und Wärmeabzugsgeräte mit Wälzelementen (5), die radial durch einen Lagerinnenring (3) und einen Lageraußenring (2) positioniert sind und eine Positionierung der einzelnen Wälzelemente (5) durch einen Lagerkäfig (4) erfolgt, der durch spanende Bearbeitung oder durch Pressung hergestellt ist.

## Beschreibung

Die Erfindung betrifft ein Lagersystem insbesondere für Rauch- und Wärmeabzugsgeräte wie Ventilatoren, als auch die Anwendung eines derartigen Lagersystems in elektrischen Maschinen zum Antrieb derartiger Geräte.

Rauch- und Wärmeabzugsgeräte und deren Antrieb insbesondere elektrische Maschinen werden u.a. bei Be- oder Entlüftung von Tunnels benötigt. Dabei sind die Anforderungen, dass ein derartiger Antrieb, also z.B. eine elektrische Maschine mit ihrem Lagersystem bei ca. 400°C Umgebungstemperatur zwei Stunden funktionsfähig bleiben muss. Diese Rauch- und Wärmeabzugsgeräte und deren Antriebe befinden sich oft mitten im Brandabschnitt und sind dabei extremen Bedingungen ausgesetzt. Die direkte Umgebungsluft kann dabei Spitzentemperaturen von 600 bis 1100°C erreichen. Damit die Ventilatoren trotzdem noch die in Normen festgelegten Zeiten funktionsfähig sind, müssen u.a. die Lager der Ventilatoren und der elektrischen Maschinen, die als Antriebsmotoren eingesetzt werden, extrem hitzebeständig sein.

Diese Geräte weisen üblicherweise eine Bauweise auf, bei der die erhitzte Umgebungsluft direkt über die elektrischen Maschine und/oder durch den Ventilator strömt. Es ist deshalb erforderlich, dass u.a. hochtemperaturbeständige Kabel zur Energiezufuhr und eine Hochtemperaturwicklungsisolation vorhanden sind. Des Weitern sind teure Sonderlager mit Schmiermitteln notwendig, die der Aufnahme der Axialkräfte und Radialkräfte dienen, welche durch das Laufrad des Ventilators und des Rotors der elektrischen Maschine hervorgerufen werden.

Der Erfindung liegt demnach die Aufgabe zugrunde, ein Lagersystem zu schaffen, das die Anforderungen insbesondere die erhöhten Temperatur-Zeitklassifizierungen erfüllt, als auch die Dauerfunktion bei normalen Umgebungstemperaturen (-30°C bis +40°C) gewährleistet. Außerdem soll eine elektrische Maschine geschaffen werden, die diesen erhöhten Temperaturanforderungen standhält.

Die Lösung der gestellten Aufgabe gelingt durch ein Lagersystem nach Anspruch 1 und eine elektrische Maschine nach Anspruch 6.

Die erfindungsgemäße Gestaltung des Lagersystems mit einem durch spanende Bearbeitung oder durch einen Pressvorgang hergestellten Lagerkäfig, führt zu einer massiven Ausführung des Lagerkäfigs. Im Störfall insbesondere einem Brand wird aufgrund der hohen Temperaturen das eventuell im Lagersystem vorhandene Fett thermisch zersetzt. Das erfindungsgemäße Lagersystem erfüllt nunmehr allein die Notlaufeigenschaften aufgrund seines massiv ausgeführten Lagerkäfigs. Ein vorzeitiger Bruch des Lagerkäfigs, wie er bei geblecht ausgeführten Lagerkäfigen auftritt, kann dadurch verhindert werden. Auch Hochtemperaturfette (PTFE-Fette) zersetzen sich bei Temperaturen über 300°C ,so dass die übliche Fettschmierung nicht realisierbar ist. Bei Drehzahlen über 1000 Umdrehungen/Minute von Ventilator und/oder elektrischer Maschine tritt zusätzlich erhöhter Materialabrieb an Lagerkäfig und Wälzkörpern auf, der zum Bruch des Lagerkäfigs und damit Versagen der Lagerung führt. Durch die erfindungsgemäße massive Ausführung des Lagersystems wird ein Bruch des Lagerkäfigs und damit eine Blockierung des Lagers verhindert oder zumindest dementsprechend lange verzögert.

Vorteilhafterweise enthält das Lagersystem einen handelsüblichen Schmierstoff, der im Normalbetrieb für die Schmierung ausreicht (Berechnungsverfahren DIN ISO 281). Der Schmierstoff kann in den bekannten Vorrichtungen bereitgestellt werden, um eine Dauerschmierung für die normalen Betriebsfälle zu gewährleisten. In Störfällen zersetzt sich dieser Schmierstoff und der Lagerkäfig generiert die Notlaufeigenschaft.

Als Werkstoff des massiven Lagerkäfigs eignet sich insbesondere Metalle wie Messing, Stahl oder kupferhaltige Gleitlagerwerkstoffe. Gegenüber Stahl weisen Messing und kupferhaltige Gleitlagerwerkstoffe die besseren Gleiteigenschaften auf.

Bei Temperaturen des Lagersystems im Störfall von über 700°C wird insbesondere Stahl als Material des Lagerkäfigs aufgrund seiner höheren Schmelztemperatur bevorzugt.

Ebenso sind nichtmetallische Lagerkäfige z.B. auf Keramikoder Kunststoffbasis geeignet, wenn sie die erforderlichen Notlaufeigenschaften aufweisen.

Eine weiteres erfindungsgemäßes Merkmal des Lagersystems ist die minimale zulässige Durchmesserdifferenz zwischen dem Innendurchmesser des Lageraußenrings und dem Außendurchmesser des Lagerkäfigs. Aufgrund der erfindungsgemäßen massiven Ausführung des Lagerkäfigs muss verhindert werden, dass der Lagerkäfig sich im Brandfall durch sehr hohe Lagertemperaturen an den Außenring anpressen kann und somit zur Blockierung des Lagers führt. Das Lagersystem weist auch bei ungünstigen Temperaturen (außerhalb dem Temperaturintervall -30 bis 40°C) derartige Maßeigenschaften und Materialpaarungen auf, die ein Verspannen der einzelnen Lagerteile verhindern. Bei einem Durchmesserunterschied von ca. 1 mm lassen sich bereits sehr viele Betriebsfälle abdecken.

Um diese Einflussgrößen, die diese minimale zulässige Durchmesserdifferenz definieren, zu berücksichtigen, ist erfindungsgemäß folgender Zusammenhang zu beachten:

ΔDₘᵢₙ = Da_{Käfig} *Δt*(α_{Käfig} - α_{Außenring})+S

wobei ΔD_{min,} die minimale zulässigen Durchmesserdifferenz definiert,
ΔDa den Außendurchmesser des Massivkäfigs bei 20°C,
Δt die Höhe der Lagertemperatur bezogen auf 20°C,
α_{Außenring} und α_{Käfig} die unterschiedlichen Wärmedehnungen der verschiedenen Werkstoff und
S einen funktional notwendigen Unterschied bzw. Sicherheit darstellt, wenn das voran stehende Produkt "NULL" ergibt; wobei in einer ersten Näherung S=0,1mm ist.

Eine elektrische Maschine muss diese oben genannten Anforderungen, die an das Lagersystem gestellt werden, genauso erfüllen. Dabei ist das Gehäuse aus Grauguss ebenso wie die Lagerschilde. Vorteilhafterweise kann das Gehäuse ebenso aus Aluminium-Gusslegierung sein. Das Lagersystem ist vorzugsweise ein Kugellager mit metallischem Massivkäfig, wobei ein Wellendichtring vorzugsweise einen Gammaring mit einer Manschette aus Nitril-Butatien-Kautschuk vorhanden ist. Als Schmiermittel sind die handelsüblichen Fette wie Esso Unirex N3 oder Unirex N3 einsetzbar. Dabei handelt es sich um lithiumverseiftes Fett. Das Isoliersystem weist für die Drahtoberfläche glasumsponnene Lackdrähte mit Lack Temperaturklasse H auf. Es sind aber ebenso Dräht mit Polyimidlackierung einsetzbar. Als Flächenisolierstoffe werden insbesondere aromatische Polyamide eingesetzt. Zur Isolation der Schaltverbindung ist ein Glasgewebeschlauch mit Silikon vorgesehen. Als Tränkharz wird Silikonharz oder ungesättigtes Polyesterimid verwendet. Die Wicklungsanschlüsse sind Silikonleitung oder Direktanschlüsse mit Glasgewebeschläuchen.

Die Erfindung sowie weitere vorteilhafte Ausgestaltungen der Erfindung gemäß Merkmalen der Unteransprüche werden im folgenden anhand eines schematisch dargestellten Lagersystems in der Zeichnung näher erläutert. Darin zeigt:

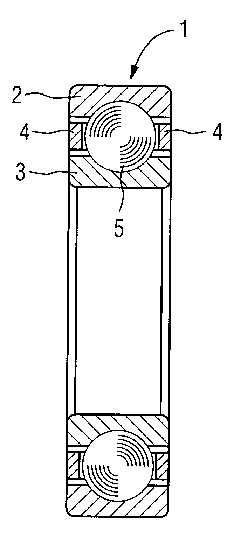

FIG 1 einen Längsschnitt eines Lagersystems.
FIG 1 zeigt ein Lagersystems 1 mit Wälzelementen 5, die als Kugel oder als Rolle ausführbar sind. Das Lagersystem 1 weist außerdem einen Lageraußenring 2 und einen Lagerinnenring 3 auf. Durch den Lagerinnenring 3 wird eine nicht näher dargestellte Welle oder Achse geführt. Die Wälzkörper 5 sind in gleichen Abständen durch einen Lagerkäfig 4, der massiv ausgeführt ist, positioniert. Der Lagerkäfig 4 kann dabei aus Stahl, Messing oder anderen kupferhaltigen Materialen ausgeführt sein. Durch die massive Ausführung des Lagerkäfigs 4 ergibt sich im Störfall, d.h. bei sehr hohen Temperaturen eine ausreichende Betriebssicherheit des Lagersystems 1 und damit der dadurch gelagerten Ventilatoren und/oder elektrischen Maschinen. Damit wird ein Bruch des Lagerkäfigs verhindert oder zumindest für eine vorgebbare Zeit verzögert.

Eine ausreichende Durchmesserdifferenz ΔD ergibt sich gemäß der Beziehung

ΔDₘᵢₙ = Da_{Käfig} *Δt* (α_{Käfig} - (α_{Außenring}) +S

mit
ΔDₘᵢₙ minimale zulässige Durchmesserdifferenz,
ΔDa Außendurchmesser des massiven Lagerkäfigs bei 20°C,
Δt Höhe der erwarteten Lagertemperatur bezogen auf 20°C, α_{Außenring} und α_{Käfig} Wärmedehnungen der verschiedenen Werkstoff; S als funktional notwendigem Unterschied bzw. Sicherheit, wenn das voran stehende Produkt "NULL" ergibt; erfahrungsgemäß liegt S bei 0,1 mm.

Damit wird vermieden, dass im Brandfall der erfindungsgemäße Lagerkäfig 4 durch thermische Ausdehnung an den Lageraußenring 2 angepresst wird und somit zur Blockierung des Lagers führt. Dies würde zum Ausfall des elektrischen Antriebs bzw. Ventilators und damit zu einer Unterbrechung der Frischluftzufuhr bzw. Rauchabgaszufuhr führen.

Beispielhaft ist hier ein Lagersystem 1 angeführt.
Der Innendurchmesser des Lagers ist 45 mm;
der Außendurchmesser des Lagers ist 85 mm;
die Breite des Lagers ist 19 mm;
als Wälzkörper 5 sind 9 Stück Kugeln vorgesehen;
ein massives Lagerkäfig 4 ist aus Messing, zweiteilig, vernietet mit 9 radialen Bohrungen in denen die Kugeln geführt sind.

Die Maße des Läuferkäfigs 4 sind : Breite = 16,5mm Innendurchmesser = 60 mm
Außendurchmesser = 72,6 mm
Minimal zulässige Durchmesserdifferenz ΔDₘᵢₙ zwischen Außenring und Lagerkäfig bei 20°C bei einer erwarteten Lagertemperatur von 500°C = 0,34 mm.
Diese minimale Durchmesserdifferenz ΔDₘᵢₙ muss immer eingehalten werden und gilt für insbesondere für folgende Lagerbauarten:
Lagerkäfig 4 Außenringgeführt; Lagerkäfig 4 Innenringgeführt und Lagerkäfig 4 Kugelgeführt.

## Patentansprüche

1. Lagersystem (1) insbesondere für Rauch- und Wärmeabzugsgeräte mit Wälzelementen (5), die radial durch einen Lagerinnenring (3) und einen Lageraußenring (2) positioniert sind und eine Positionierung der einzelnen Wälzelemente (5) durch einen Lagerkäfig (4) erfolgt, der durch spanende Bearbeitung oder durch Pressung hergestellt ist.

2. Lagersystem (1) nach Anspruch 1, **dadurch gekennzeichnet, dass** im Lagersystem (1) Schmiermittel und/oder Nachschmiereinrichtungen vorgesehen sind.

3. Lagersystem (1) nach Anspruch 1 oder 2, **dadurch gekennzeichnet, dass** der Lagerkäfig (4) eine axiale Ausdehnung aufweist, die kleiner oder gleich der axialen Ausdehnung des Lagerinnenrings (3) bzw. Lageraußenrings (2) entspricht.

4. Lagersystem (1) nach Anspruch 3, **dadurch gekennzeichnet, dass** der Innendurchmesser des Lageraußenrings (2) bei 20 °C um 1 mm größer ist als der Außendurchmesser des Lagerkäfigs (4).

5. Lagersystem nach Anspruch 1 oder 2, **dadurch gekennzeichnet, dass** der Unterschied zwischen Lageraußenring (2) und Außendurchmesser des Lagerkäfigs (4) bestimmt ist durch den Zusammenhang
ΔDₘᵢₙ = Da_{Käfig} *Δt* (α_{Käfig} - α_{Außenring})+S ,
wobei
ΔDₘᵢₙdie minimale zulässige Durchmesserdifferenz,
Da_{Käfig} der Außendurchmesser des Lagerkäfigs (4) bei 20°C,
Δt die Höhe der Lagertemperatur bezogen auf 20°C,
α_{Käfig} ;α_{Außenring} werkstoffabhängige Wärmeausdehnungskoeffizienten von Lagerkäfig (4) und Lageraußenring (2);
S funktional notwendiger vorgebbarer Unterschied bzw. Sicherheit, wenn voranstehendes Produkt "NULL" ist.

6. Elektrische Maschine mit zumindest einem Lagersystem (1) nach einem der vorhergehenden Ansprüche.

7. Elektrische Maschine nach Anspruch 6, **dadurch gekennzeichnet, dass** sämtliche zum elektrischen Betrieb der Maschine notwendigen Teile hochtemperaturbeständig sind.

8. Elektrische Maschine nach Anspruch 7 mit folgenden Merkmalen:
- Gehäuse und Lagerschilde sind aus Grauguss oder aus Aluminium-Gusslegierung,
- das Lagersystem ist ein Kugel-/oder Wälzlager mit einem massiv ausgeführten Lagerkäfig, wobei optional ein Wellendichtring vorzugsweise ein Gammaring mit einer Manschette aus Nitril-Butatien-Kautschuk vorgesehen ist,
- als Schmiermittel sind Fette wie Esso Unirex N3 oder Unirex N3 einsetzbar,
- das Isoliersystem für die Drahtoberfläche weist glasumsponnene Lackdrähte mit Lack Temperaturklasse H oder mit Polyimidlackierung auf,
- als Flächenisolierstoffe sind insbesondere aromatische Polyamide eingesetzt,
- zur Isolation der Schaltverbindung ist ein Glasgewebeschlauch mit Silikon vorgesehen,
- als Tränkharz wird Silikonharz oder ungesättigtes Polyesterimid verwendet,
- die Wicklungsanschlüsse sind Silikonleitung oder Direktanschluss mit Glasgewebeschläuchen.
